# EUROPEAN PATENT APPLICATION

(11) **EP 4 279 418 A1**
(43) Date of publication of application: **22.11.2023**
(21) Application number: 22173513.7
(22) Date of filing: 16.05.2022
(51) Int. Cl.: B65G 1/04, B65G 1/06, B65G 1/10

(54) **METHOD FOR RETRIEVING GOODS IN A WAREHOUSE SYSTEM, AND WAREHOUSE SYSTEM**

(71) Applicant: VOLUME Lagersysteme GmbH, 01067 Dresden (DE)
(72) Inventor: Voloskov, Mikhail, 01067 Dresden (DE); Preußer, Martin, 01067 Dresden (DE)
(74) Representative: Laqua, Bernd Christian Kurt

(57) **Abstract**

The present disclosure relates to a method for retrieving goods (106) in a warehouse system (100) comprising an at least two-dimensional arrangement of storage spaces. One or more cars (104) for carrying goods (106) are arranged in at least one of a plurality of rows, wherein the one or more cars (104) in a respective row are moveable along the respective row in the transverse direction (Z). A width (111) of each storage space (110) in the transverse direction (Z) is less than a width (201) of a shuttle (200) in the transverse direction (Z) for retrieving goods from a particular storage space (110). A first set of cars (141) is shifted in a first direction by a first distance (151) along the row, and, if necessary, a second set of cars (142) is shifted in a second direction by a second distance (152), the second direction being opposite to the first direction. The sum of the first and second distances and a width (111) of the particular storage space (110) in the transverse direction (Z) is at least the width (201) of the shuttle (200) in the transverse direction (Z).

## Description

The present disclosure generally relates to the field of warehouses. More particularly, the present disclosure relates to a method for retrieving goods from a particular storage space in a warehouse system comprising an at least two-dimensional arrangement of storage spaces, and further relates to a warehouse system capable of performing such method.

In the industry, warehouses are used to store large amounts of goods in an organized manner. Warehouse systems typically employed nowadays encompass a variety of types of storage systems ranging from simple pallet racks, allowing the storage of palletized goods in horizontal rows with multiple levels, to high bay warehouses, allowing the storage of goods in heights of up to 50 meters, for example. Stacker cranes movable in lanes between two opposing rack fronts are typically employed to supply the racks with goods. The space necessary for these lanes is generally lost for the storage of goods, however, and, therefore, these types of systems do not provide an optimal usage of space available in a warehouse.

Compact warehouse systems are another type of storage systems which focus on the efficient use of available space in a warehouse. One example of compact warehouse systems are automated channel storage systems in which multiple storage spaces are provided in the depth of a rack in the form of channels accessible from the front or the back of the rack. Channel vehicles, so called shuttles, are used to move goods within the channels. An exemplary channel storage system is described in WO 2009/132687 A1, for example. In channel storage systems, however, goods within a channel can only be stored and retrieved in a first-in first-out (FIFO) or last-in first-out (LIFO) manner and it is thus not possible to directly access goods at any desired storage space within a channel, such as in the middle of a full channel, for example.

Furthermore, EP 3 431 416 A1 relates to a warehouse system having a matrix of rows and lanes, the warehouse system comprises one or more cars arranged in the rows and a shuttle drivable in the lanes, wherein the cars move by at least one storage space in the respective row to clear a path in a lane, so that the shuttle can drive to a particular storage space between the cars through the cleared lane.

However, such warehouse systems still require a large space for storing goods.

It is thus an object of the present disclosure to provide a method and warehouse system that allow a compact storage of the goods in the warehouse.

According to a first aspect of the present disclosure, a method for retrieving goods from a particular storage space in a warehouse system is described. The warehouse system comprises an at least two-dimensional arrangement of storage spaces including a plurality of lanes extending in a longitudinal direction X and at least one row extending in a transverse direction Z, wherein a storage space is formed at each intersection of the plurality of lanes and the at least one row, wherein a plurality of cars for carrying goods and at least one shuttle are employed to store goods at the storage spaces, wherein the plurality of cars is arranged in the at least one row, the cars in a respective row being movable along the respective row in the transverse direction Z, wherein the at least one shuttle is movable along at least one of the plurality of lanes in the longitudinal direction X, and wherein a width of each storage space in the transverse direction Z is less than a width of each of the at least one shuttle in the transverse direction Z.

The warehouse system may be contemplated as forming a grid or matrix of storage spaces. The width of each storage space in the transverse direction Z may be the size (or extension) of one grid cell in the transverse direction Z, i.e., the reserved space in the transverse direction Z to accommodate a car (possibly including goods placed on the car) in one storage space along a row. The width of each storage space in the transverse direction Z can thus be given by a possible extension of a car in the transverse direction Z, such as the maximum required space for placing the car at a storage space. Likewise, the width of each storage space in the transverse direction Z can be given by a possible extension of goods in the transverse direction Z, such as the maximum required or maximum allowed space for goods at the respective storage space. For instance, goods may have a larger extension in the transverse direction Z than a car, on which the goods are placed. It is to be understood that the width of each storage space may include a certain tolerance or safety distance, so that a car and/or goods placed at (e.g., the centre of) one storage space do not interfere or contact with another car and/or goods placed at (e.g., the centre of) a neighbouring storage space.

The width of the at least one shuttle in the transverse direction Z is the size or dimension of the shuttle in the transverse direction Z. Particularly, the width of the at least one shuttle is the (maximum) size or dimension in the transverse direction Z of at least a portion of the shuttle that will move above the storage spaces when moving along a lane. For instance, the portion of the shuttle may be an arm or gripping device that is configured to grip and transport goods and will move through a space that is usually occupied by goods stored at storage spaces, if the associated lane is not cleared for the movement of the shuttle. Since the arm or gripping device of the shuttle has to be placed next to the goods in order to grip (and, e.g., slightly lift) the goods from a car, the width of the (portion of the) shuttle is usually larger than the (maximum) size of the goods.

In conventional warehouse systems, the size of a storage space, such as the width of a storage space in the transverse direction Z, is usually set to such an extent that the shuttle can move along a lane in the longitudinal direction X without interfering or contacting the cars and/or goods parked at storage spaces directly neighbouring the lane, along which the shuttle moves, such as the cleared path. In other words, the width of a conventional storage space is usually chosen to be larger than the width of the shuttle.

The warehouse system of the present disclosure allows a more compact storage of goods, since the width of each storage space in the transverse direction Z is less than the width of each of the at least one shuttle in the transverse direction Z. This specific sizing of the storage spaces allows saving space along a row for each storage space, so that the density of goods storable in one row increases. Thus, the entire width of the warehouse in the transverse direction Z may be smaller or one or more additional storage spaces may be available in a row compared to conventional warehouse systems.

The method further comprises shifting, in a first direction along the transverse direction Z, a first set of cars arranged next to the particular storage space in an associated row by a first distance. The particular storage space is the storage space in the warehouse system, from which the shuttle is to pick up goods. Alternatively, the particular storage space can be the storage space in the warehouse system, at which the shuttle places goods to be stored. The first direction along the transverse direction Z is a direction pointing in the same direction as the transverse direction Z. Thus, the first set of cars is shifted away from the particular storage space by the first distance along the row associated with the particular storage space.

Optionally, the method further comprises shifting a second set of cars in a second direction along the transverse direction Z and opposite to the first direction by a second distance, the second set of cars being arranged next to the particular storage space and opposite, from the particular storage space, to the first set of cars in the associated row. For instance, if the particular storage space is not a marginal storage space of the associated row, the second set of cars is shifted away from the particular storage space by the second distance along the associated row, but in an opposite direction than the first set of cars. A marginal storage space is the first or last storage space and/or first or last car in the associated row. Such marginal storage spaces have only one neighbouring storage space or car in the transverse direction Z.

It is to be understood that, if the particular storage space is a marginal storage space, i.e., the storage space at the beginning or end of the row, there is only one set of cars arranged next to the particular storage space, so that the only set of cars to be shifted consists of all remaining cars in the row. In other words, each of the first and second set of cars can comprise a particular number of cars including zero, i.e., no cars, up to the number of all cars in a row minus one.

The method further includes moving the at least one shuttle in the longitudinal direction X to the particular storage space, for example, to pick up goods from the car at the particular storage space.

The sum of the first and second distances and the width of the particular storage space in the transverse direction Z is at least the width of the shuttle in the transverse direction Z. Thus, the compact storage of goods along the row, which prevented the shuttle from reaching the particular storage space, is given up only for the particular storage space by shifting the first and second set of cars away from the particular storage space, so that the shuttle fits into the widened space. In other words, in case of goods being stored at the particular storage space, an originally compact gap on each side of the storage space is widened by the first and second distance, respectively. These widened gaps are chosen sufficiently large enough for the respective portion of the shuttle to move in the longitudinal direction X into the respective widened gap for reaching the goods stored at the particular storage space. As an example only, the compact gap on each side of the storage space, i.e., in the compact storage configuration before shifting any set of cars and thereby widening the gap, can be between 10 to 100 mm, such as between 25 to 75 mm, and is preferably 50 mm. After shifting the first or second set of cars, the size of a respective widened gap in the transverse direction Z can be between 50 and 300 mm, such as between 100 and 250 mm, and is preferably 200 mm. Thus, the first and second distances, according the preferred example, is 150 mm.

The cars of the first and second set of cars, although being shifted, can still be arranged next to one another (pairwise, of directly neighbouring cars) having the compact gap therebetween. In other words, these cars are arranged according to the original compact grid size, where the width of each storage space in the transverse direction Z is less than a width of the shuttle. Thus, a row of the warehouse system requires only a (minimum) length equal to a multiple of the width of a storage space plus the first and second distance.

It is to be understood, that the method can comprise shifting only one of the first and second set of cars. In other words, one of the method steps of shifting the first and second set of cars can be optional, particularly if the particular storage space is a marginal storage space. This may be particularly relevant for the storage space at an end of the row. Such storage space is free at the end of the row, so that there is enough space for the portion of the shuttle to move next to the goods on this storage space. In other words, no neighbouring car or goods has to be shifted to widen the gap for the portion of the shuttle.

A further possibility for one of the shifting steps to be optional is the case where the shuttle has only one arm or gripping device to grip the goods from only one side, for example a C-shaped shuttle, wherein a lower (horizontal) portion of the shuttle grips the goods from only one side. In this case, only the set of cars on the side of the particular storage space has to be shifted, where the portion of the shuttle (the vertical part of the C-shaped shuttle) moves along the longitudinal direction X.

Furthermore, it is to be noted that a set of cars, i.e., the first set of cars and/or the second set of cars, may comprise none car, one car or a plurality of cars.

In a variant, the sum of the first and second distances and the width of the particular storage space in the transverse direction Z can be at most the width of the shuttle in the transverse direction Z. Thus, the first and second set of cars has to be shifted only as much as the portion of the shuttle requires to move along the longitudinal direction X next to the goods stored in the particular storage space. Optionally, the sum of the first and second distances and the width of the particular storage space in the transverse direction Z can further be at most the width of the shuttle in the transverse direction Z plus a safety distance between the shuttle (e.g., when operating) and one of the first and second set of cars closest to the shuttle. Such a safety distance may be a few millimetres or a few centimetres, e.g., 5 to 50 mm, such as 10 to 30 mm, and is preferably 20 mm. It is to be understood that, in the above preferred example of a compact gap of 50 mm and a widened gap of 200 mm, such safety distance can be included.

In another variant, the first distance can be substantially equal to a width of the portion of the shuttle that moves into the gap between the particular storage space and the first set of cars. As a mere example, such portion of the shuttle, such as an arm or gripping device, may have a (maximum) size in the transverse direction Z. The first distance is then chosen to be substantially equal to this (maximum) size of the shuttle portion in the transverse direction Z. Since there is usually a safety distance between two neighbouring cars in a row, shifting the first set of cars by the first distance being substantially equal to the size of the portion of the shuttle will already provide a safety distance between the portion of the shuttle and the directly neighbouring car of the first set of cars. Likewise, the second distance can be substantially equal to a width of the portion of the shuttle that moves into the gap between the particular storage space and the second set of cars.

Moreover, the first and second distance may differ from one another, particularly if the respective (maximum) size of the portions of the shuttle moving in the respective gap differ from one another.

It is further to be understood that the first distance can be equal to the second distance, and/or the (maximum) size of each portion of the shuttle can be the same.

In another variant, said shifting the first and second set of cars can comprise driving each of the cars of the first and second set of cars in the respective first and second direction individually. This allows the provision of driving means for each individual car, so that the cars can be moved along the row in either the first or second direction in an easy-to-control manner as well as in a fast manner, since simultaneous driving of the plurality of cars is also possible.

On the other hand, each car can be driven by the same driving means one after the other. Thus, a car of the first or second set of cars being furthest away from the particular storage space may be shifted first, followed by each directly neighbouring car of the respective set of cars, until the last car of the respective set of cars being directly adjacent to the particular storage space is shifted away from the particular storage space.

Alternatively, said shifting the first and second set of cars can comprise driving at least one of the cars of the first and second set of cars in the respective first and second direction, wherein the cars of the first set of cars are coupled to one another and the cars of the second set of cars are coupled to one another. In other words, the first set of cars and the second set of cars form a chain or train of cars connected to one another, so that, if one of the cars of each set is shifted, the entire set of cars will be shifted.

In a further variant, the method can further comprise moving a driver to at least one of the cars of the first set of cars and latching the driver with the at least one car of the first set of cars before said shifting the first set of cars in the first direction. The shifting of the first set of cars in the first direction can be performed by the driver. The driver can be a single driver latching and shifting one car of the first set after the other. Alternatively, the driver can be configured to latch with a plurality of cars of the first set of cars or all cars of the first set of cars at once and shift the plurality of cars or all cars of the first set.

Likewise, the method can further comprise moving a driver to at least one of the cars of the second set of cars and latching the driver with the at least one car of the second set of cars before said shifting the second set of cars in the second direction Z. The shifting of the second set of cars in the second direction can be performed by the driver. The driver can be a single driver latching and shifting one car of the second set after the other. For instance, the driver can be the same driver latching the car(s) of the first set of cars. Alternatively, the driver can be configured to latch with a plurality of cars of the second set of cars or all cars of the second set of cars at once and shift the plurality of cars or all cars of the second set.

In yet a further variant, a plurality of drivers may be connected to one another, so that they can move along the row in the transverse direction Z together. Each of the plurality of drivers can be configured to latch with one of the cars of the first and/or second set of cars. Thus, the method can comprise latching a corresponding number of drivers with one or more cars of the first set of cars and shifting the cars of the first set, unlatching (releasing) the cars of the first set, latching a corresponding number of drivers with one or more cars of the second set of cars and shifting the cars of the second set, and unlatching (releasing) the cars of the second set.

In a variant, said latching the driver with the at least one car of the first set of cars can comprise releasing a parking condition of the first set of cars. Likewise, said latching the driver with the at least one car of the second set of cars can comprise releasing a parking condition of the second set of cars. Thus, while coupling the cars with the (respective) driver, a parking condition of each car can be released, so that a fast shifting of the cars and also a secure parking of the cars in the warehouse system is possible.

In another variant, the method can further comprise activating a parking condition of the first set of cars in the associated row, and/or activating a parking condition of the second set of cars in the row. The activating of the parking condition of the first and/or second set of cars can include activating a break, a motor break or other component hindering the car from moving along the row or at least providing a high resistance against the moving of the car along the row.

Additionally or alternatively, the method can further comprise releasing the parking condition of the first set of cars before said shifting the first set of cars, and/or releasing the parking condition of the second set of cars before said shifting the second set of cars. This can include deactivating (releasing) a break, a motor break or other component hindering the car from moving.

In any case, the activating or releasing the parking condition can be controlled for each individual car separately, for one or more cars of the first set of cars and/or the second set of cars, or for all cars in the row associated with the particular storage space.

According to a second aspect of the present disclosure, a warehouse system is provided. The warehouse system has an at least two-dimensional arrangement of storage spaces including a plurality of lanes extending in a longitudinal direction X and at least one row extending in a transverse direction Z, wherein a storage space is formed at each intersection of the plurality of lanes and the at least one row.

In order to store and retrieve goods at/from a particular storage space, the warehouse system comprises a plurality of cars for carrying goods, wherein the plurality of cars is arranged in the at least one row, wherein the cars in a respective row are movable along the respective row in the transverse direction Z. The warehouse system further comprises at least one shuttle movable along at least one of the plurality of lanes in the longitudinal direction X for retrieving/storing goods from/at the particular storage space.

The explanations made above for the warehouse system of the first aspect and its details and variants likewise apply to the warehouse system of the second aspect. As such, aspects described above may be applicable to the warehouse system described in the following as well, and vice versa. For example, a width of each storage space in the transverse direction Z can be less than a width of each of the at least one shuttle in the transverse direction Z.

In order to move the shuttle to the particular storage space, which can be partially blocked by cars and/or goods directly neighbouring the particular storage space along the row, the warehouse system comprises shifting means configured to shift, in a first direction along the transverse direction Z, a first set of cars arranged next to the particular storage space in an associated row by a first distance.

The shifting means can further be configured to shift a second set of cars in a second direction along the transverse direction Z and opposite to the first direction by a second distance. The second set of cars are arranged next to the particular storage space and opposite, from the particular storage space, to the first set of cars in the associated row. For instance, if the particular storage space is not a marginal storage space of the associated row, the second set of cars is shifted in the second direction. Otherwise, only the first set of cars requires shifting, as explained above for the first aspect.

The sum of the first and second distances and the width of the particular storage space in the transverse direction Z is at least the width of the shuttle in the transverse direction Z. Thus, as explained above for the first aspect, an originally compact gap is widened on the side of the particular storage space facing the first set of cars and/or an originally compact gap is widened on the side of the particular storage space facing the second set of cars, wherein a portion of the shuttle is able to move into the respective widened gap. Therefore, the warehouse system can achieve a high density of goods stored in a horizontal area, such as along the row, when having the compact gap between adjacent cars.

According to exemplary variants, the shifting means can comprise an individual motor at each car, wherein the motor is configured to shift the respective car along the associated row. The motor may drive one or more rollers or tires or the like, so that the car moves in the first direction or the second direction. The motor can also be a linear motor driving and shifting the car along a linear component of the warehouse system, such as a rail. The motor may further be configured to achieve a parking condition for the car, such as by providing a high resistance against turning the motor, so that the car can only be pushed away when overcoming the resistance.

Alternatively or additionally, the shifting means can comprise a motor arranged at one car of each of the first and second set of cars, wherein the motor is configured to shift the respective car along the associated row, and wherein the cars of the first set of cars are coupled to one another and the cars of the second set of cars are coupled to one another. For instance, since the number of cars defining the first set of cars and the second set of cars depend on the location of the particular storage space, the first car in a row and the last car in the row may be equipped with such motor, since the first and last car will always form part of one the first and second set of cars. This motor may also be configured to achieve a parking condition of the car.

Also alternatively or additionally, the shifting means can comprise a carrier configured to move along the associated row in the transverse direction Z and further configured to couple to at least one car in order to shift the car in the first or second direction. This carrier may drive in the transverse direction Z, for example, underneath the cars in the row. The carrier may be, for example, coupled to one or more rails extending along the transverse direction Z. Such rails may be employed to place the cars therein or thereon for movement of the cars along the row. Alternatively, the carrier may drive along one or more dedicated rails, which are arranged parallel to any means carrying the cars along the row. The coupling to the at least one car can be achieved by any coupling or link mechanism that can connect to the at least one car for shifting the car and release the at least one car for a free movement of the carrier, such as when moving to another car for shifting.

It is to be understood that the carrier can also drive horizontally adjacent to the cars, i.e., between two adjacent rows. This allows employing the same carrier for moving and shifting the cars in both adjacent rows.

Furthermore, the warehouse system can comprise at least two carriers, at least one carrier for the first set of cars and at least one carrier for the second set of cars. This allows faster shifting of the cars of both sets, such as simultaneous shifting.

Further alternatively or additionally, the shifting means can comprise a sliding bar configured to move back and forth along the transverse direction Z, at least one driver arranged on the sliding bar, and a latching pin at each of the at least one driver and configured to engage with one of the plurality of cars to shift the car based on the back-and-forth movement of the sliding bar. The at least one driver can be fixedly mounted to the sliding bar, so that any movement of the sliding bar induces a movement of the driver along the row. It is to be understood that any coupling or link mechanism can be used instead of a latching pin, that can connect to the at least one car for shifting the car and release the at least one car for a free movement of the carrier.

As a mere example, the number of drivers can be equal to the number of storage spaces in the associated row, i.e., one driver for each car. This allows engaging (coupling) the drivers associated with the at least one car of the first set of cars, shifting the entire first set of cars at once, and disengaging (releasing) the drivers from the car(s) of the first set of cars. All other drivers, i.e., the drivers associated with the particular storage space and associated with the at least one car of the second set of cars, are disengaged (released) when shifting the first set of cars, so that they can freely move with respect to the cars. Thereafter, the drivers associated with the at least one car of the second set of cars can be engaged (coupled) with the respective car(s) of the second set, the at least one car of the second set of cars can be shifted at once, and all drivers can then be disengaged (released). Again, all other drivers not engaged with the car(s) of the second set of cars are disengaged (released) while shifting the second set of cars. Thus, the sliding bar moves in the first direction while the drivers associated with the car(s) of the first set of cars are engaged, moves back in the second direction while the drivers associated with the car(s) of the first set of cars are disengaged/released (to bring the drivers to a position where they can be engaged with the at least one car of the second set of cars), and moves in the second direction while the drivers associated with the car(s) of the second set of cars are engaged.

In a variant, at least one of the cars can comprise a protruding member having a recess, the recess being configured to receive the latching pin of the at least one driver. It is to be understood that the protruding member can be any component of the car that extends or is arranged at a location next to the driver, so that the driver can move along the protruding member when not engaged with the car.

In another variant, the driver can be configured to extend the latching pin relative to the driver and into the recess of the protruding member. The extending of the latching pin can include a passive or active movement of the latching pin. A passive movement, for example, can be achieved by biasing the latching pin in a manner that it is pushed out of the driver. An active movement of the latching pin can be achieved by an actuator, such as a (electro) magnetic actuator, a motor, a linear motor, or the like.

The extending of the latching pin is to be understood as extending as far as required to engage with the recess of the protruding member of the car. For example, the latching pin can extend and engage with the recess of the protruding member to securely move and shift the car along the row by the coupling of the driver and the car via the latching pin.

Additionally or alternatively, the protruding member can have a slant on each side in the transverse direction Z to push the latching pin into the driver when the driver moves relative to the car in the transverse direction Z. This allows the provision of a force to the latching pin pushing the latching pin out of the driver. Once the driver moves along the car in the transverse direction, the latching pin is pushed into the driver by the respective slant on the side from which the driver comes, and then extends out of the driver into the recess when the latching pin reaches the recess. It is to be understood that the latching pin and recess share a common vertical or horizontal plane, so that a coupling between driver and car is always possible. The extending of the latching pin into the recess can be achieved by a passive or active movement as described above. This allows the driver to move along the car and automatically engage with the car, i.e., without the necessity of stopping the driver at the recess.

In a further variant, the driver can be configured to retract the latching pin out of the recess of the protruding member. This retracting of the latching pin, i.e., a decoupling from the car or disengaging of the driver, can be achieved in an opposite manner as described above for extending the latching pin out of the driver. Thus, a passive or active movement of the latching pin into the driver, i.e., away from the recess and car, can be implemented. It is to be understood that a passive movement is only possible, if extending the latching pin is implemented in an active manner, and vice versa. The active movement can be achieved by an actuator, such as a (electro) magnetic actuator, a motor, a linear motor, or the like.

For instance, the driver can include an electromagnetic actuator retracting the latching pin against a biasing member. The biasing member biases the latching pin to extend from the driver. Thus, a passive extending of the latching pin and an active retracting of the latching pin can be achieved. This allows moving the driver along the transverse direction Z with an extended latching pin. When the latching pin contacts the slant of the protruding member, the latching pin is pushed into the driver against the biasing force of the biasing member. Continuous movement of the driver along the transverse direction Z will bring the latching pin in an overlap position with the recess, so that the latching pin engages the recess due to the force induced by the biasing member. In this position, the driver is coupled to the car and can move or shift the car. In order to release the car from the driver, the electromagnetic actuator retracts the latching pin out of the recess, so that the driver is free to move in the transverse direction Z, i.e., is disengaged/decoupled from the car.

In yet a further variant, the warehouse system can further comprise holding means configured to hold the plurality of cars in a parking condition along the associated row. A parking condition means that each of the cars cannot move along the row by itself or when being pushed under normal conditions, such as another moving car contacts the car in the parking condition. Thus, a particular resistance against a movement is present and the car is fixed with respect to the row and, hence, with respect to the warehouse system.

For example, the holding means can comprise an individual braking device at each car, wherein the braking device is configured to hold the respective car along the associated row. Such braking device can be implemented as a brake at at least one roller of the car on which the car rolls along the row. Such brake can interact with a rail on which the car rolls (alternatively or additionally to interaction with the roller). Another option is a breaking device arranged at each storage space configured to interact with a portion of the car, so as to hold the car fixed at the storage space or release the car for a free movement.

Alternatively or additionally, a breaking device can be arranged at one car of each of the first and second set of cars, wherein the breaking device is configured to hold the respective car along the associated row, and wherein the cars of the first set of cars are coupled to one another and the cars of the second set of cars are coupled to one another. For instance, such braking device can be arranged at the first and last car of a row, which will always form part of the first set of cars or the second set of cars, while the remaining cars of the respective sets are coupled to the car with the brake. It is to be understood that the braking device can also be arranged at a fixed position with respect to the warehouse system and can be configured to interact with a portion of the car when the car is placed next to the brake.

It is to be understood that, at a time when all cars are in a parking condition, at least one car can be held by the holding means, while all cars of the row are coupled to one another, so that they do not move.

Also alternatively or additionally, the holding means can comprise a latching rail having at least one notch, the latching rail being fixedly arranged in the warehouse system along the associated row, and a pivotable pawl arranged at at least one of the cars, wherein the pivotable pawl is configured to engage with the at least one notch to hinder a movement of the car along the associated row. In other words, the pivotable pawl is arranged at the car at a location next to the latching rail, so that the pivotable pawl can engage with the at least one notch, once the car reaches the corresponding position along the row where the pivotable pawl is arranged at the respective notch.

It is to be understood that the latching rail may have recesses, columns or other protrusions instead of notches, and the pivotable pawl may be implemented by a corresponding latching means, such as a hook, or the like. In any case, both components can interact with one another, so that a car can be brought to a parking condition at a specific storage space.

In another variant, two or more of the at least one notch can form a first group of notches, wherein a distance between a first notch and a second notch of the first group of notches is equal to the first distance. In this manner, the car can be shifted in the first or second direction until the pivotable pawl engages the first notch or the second notch, respectively, thereby limiting the shifting to the first distance.

Furthermore, a distance between the second notch and a third notch of the first group of notches can be equal to the second distance. Likewise, the car can be shifted between a position corresponding to the second notch and a position corresponding to the third notch, and once the pivotable pawl engages the second or third notch, the shifting of the car is limited to the second distance.

Thus, the first and/or second distance can be easily predefined by the provision of the latching rail having the at least one notch. The pivotable pawl may be provided with a biasing member forcing the pivotable pawl into a position, where it engages with the notch. This allows disengaging the pivotable pawl and starting shifting the car until the pivotable pawl (which can slide along the latching rail) will engage with another notch due to the biasing force acting thereon and the car is stopped after the first or second distance.

In yet another variant, the latching rail can have at least two groups of notches, wherein each group comprises at least two notches and is associated with one storage space, and wherein a distance between the first notch of the first group of notches and a first notch of a second group of notches is equal to the width of each storage space. In other words, the first notch of each group defines a first position of the car at the corresponding storage space. Moving the car from one first notch to another first notch of a different group corresponds to moving the car from one storage space to another.

It is to be understood that each group of notches may have the same number of notches, wherein each notch of one group has a distance to one notch of another group that corresponds to the width of the storage space or a multiple of the width of the storage space.

In a variant, the at least one car can comprise a pushrod configured to pivot the pivotable pawl between a holding position, in which the pivotable pawl engages with the at least one notch, and a release position, in which the pivotable pawl is disengaged from the at least one notch allowing the movement of the car along the associated row. The pushrod can contact the pivotable pawl or can form part thereof, so that the pivotable pawl can be brought into the holding position or the releasing position.

In another variant, the at least one car can comprise an actuator configured to actuate the pushrod or pivot the pivotable pawl, in order to change the pivotable pawl between the holding position and the release position. Such actuator can be controlled by the car or by an overall controller of the warehouse system. The actuator can be a magnetic, electric, hydraulic or pneumatic actuator.

Alternatively or additionally, the shifting means can be configured to actuate the pushrod to bring the pivotable pawl from the holding position to the release position. Thus, when the shifting means couple with the car, the pivotable pawl can be brought into the release position at the same time. This allows an easy to implement way of holding the car (having a parking condition) at a storage space and shifting the car with the shifting means while simultaneously releasing the car from the parking condition.

In another variant, the warehouse system can comprise coupling means for coupling the cars of the first set of cars or the second set of cars. Thus, only one car of each set has to be moved or shifted, while the remaining cars are moved and shifted due to the coupling. Such coupling means may be releasable and closable, so that the cars forming the respective set of cars can be chosen anytime and the cars can be regrouped into different sets. For instance, since the particular storage space defines which cars form a first set of cars and/or second set of cars on either side of the particular storage space, different cars need to be coupled to one another. Such coupling means can be controllable.

In a variant, the warehouse system further comprises a controller controlling the cars in the row, controlling the cars in a plurality of rows, such as all rows in one level of the warehouse system, and/or controlling all cars in the warehouse system.

For instance, the controller may be in communication with sub-controllers of shuttle(s), cars, rows, lanes, levels and/or shifting devices, and the like, in order to move the shuttle(s), the cars, one or more cars in each row, and/or one or more shuttles in each lane. Alternatively or additionally, the controller may be in direct communication with the shuttle, cars, rows, lanes, levels and/or shifting devices, and the like. Any of such communication may include a wired communication and/or wireless communication, including near field communication.

In yet another variant, the shuttle is configured to be movable along at least one of the lanes at a top of the at least one lane. For instance, the shuttle can comprise rollers engageable in rails extending at the top of the at least one lane. Each of the rollers, once engaged in an associated rail, is capable of rolling or gliding along the rail, i.e., moving the shuttle at the top of the corresponding lane. Thus, the shuttle can be moved over the cars arranged in the row(s).

The shuttle can comprise a gripping arm configured to lift the goods from one of the storage spaces when the shuttle is positioned above the goods, i.e., positioned above one of the storage spaces. The shuttle further comprises a lifting device for lifting the gripping arm and the goods when the gripping arm grips the goods.

The shuttle can be driven to shift goods along the at least one lane in the longitudinal direction of the warehouse system. For instance, the shuttle can be driven along the rail extending at the top of the at least one lane using the rollers engageable in the rail. For driving purposes, the shuttle may comprise a driving device configured to drive the rollers to move the shuttle along the at least one lane. The driving device may be controlled by a control system of the warehouse system, e.g., through signals transmitted to the shuttle, e.g., via wireless transmission. The driving device may be an electric motor, for example, but may also be based on other drive technologies, such as magnetic drive technologies or linear motors or hydraulic/pneumatic drives, for example.

In a variant of the shuttle, the gripping arm can comprise a rod extending downwards from the frame, wherein the rod comprises a jaw at a lower end thereof, and wherein the rod is rotatable about a longitudinal axis of the rod so as to turn the jaw to grip the goods. For instance, the jaw may be configured to the placed (by rotation of the rod) under a portion of the goods, so that lifting the gripping arm by the lifting device allows lifting the goods from the storage space. As a mere example, the goods may be carried on a pallet or tray, and the jaw may be configured to be placed underneath a portion of the pallet or tray.

In yet another variant, the shuttle can further comprise an actuator configured to rotate the rod. For example, the actuator may be an electrical actuator, which is configured to rotate the rod to either grip or release the goods.

As a mere example, the actuator can be arranged adjacent to the rod and is coupled to the rod via a gear unit. Alternatively, the actuator may include a rotating shaft that is directly coupled with the rod, so that a rotating movement of the actuator induces a corresponding rotation of the rod.

The at least one shuttle may pick up goods from a car in a respective lane and shift the goods along the lane as needed. In one variant, the at least one shuttle may comprise a warehouse-wide shuttle which may be relocated between different lanes as well as different levels of the warehouse system. In another variant, the at least one shuttle may comprise level-wide shuttles which may be relocated between different lanes on the same level, but not between different levels. In both variants, relocation of the shuttles in the transverse direction from one lane to another may be carried out through movement of the respective shuttle along a free row of the warehouse system in the transverse direction. The free row may be a dedicated row serving for the purpose of transferring shuttles in the transverse direction which may not be used for the storage of goods. Lifts, on the other hand, may be used to relocate a shuttle from one level to another. In still another variant, the at least one shuttle may comprise separate shuttles for each of the plurality of lanes. In this variant, shuttles do not need to be relocated at all and free rows for relocating the shuttles in the transverse direction may not be required.

When goods are to be retrieved by a shuttle from a particular storage space, it may happen that, in the lane of the particular storage space, other storage spaces may be occupied (by cars and/or goods) that prevent the shuttle from shifting the goods from the particular storage space to an end of the lane, where the goods may be transferred further in other directions as needed. In such a situation, the goods are to be retrieved from a particular storage space which is not an outermost occupied storage space in a lane. To gain access to the particular storage space for transfer of the goods by the shuttle, a path required to shift the goods by the shuttle from the particular storage space to the end of the lane must be cleared. The warehouse system may thus comprise a control system, such as a warehouse management computer, for example, which, in order to retrieve goods from a particular storage space, may be configured to drive the one or more cars in at least one of the plurality of rows to clear a path in the lane of the particular storage space enabling the at least one shuttle to shift the goods along the lane in the longitudinal direction from the particular storage space to an end of the lane, and drive the at least one shuttle to shift the goods along the cleared path from the particular storage space to the end of the lane.

Clearing the path in the lane of the particular storage space may be carried out in various ways. In one variant, clearing the path in the lane of the particular storage space may comprise driving, for each row from the end of the lane to (but not including) the particular storage space (i.e., including the row at the end of the lane, but excluding the row of the particular storage space), at least one car of the one or more cars in the respective row by at least one storage space (i.e., by the width of one storage space) in the transverse direction so that the lane of the particular storage space is cleared in the respective row. The cars in each row may be driven in the transverse direction in parallel so that the path in the lane of the particular storage space may be cleared in just a single driving step.

In a particular variant, among the plurality of lanes, a particular lane may be empty before clearing the path in the lane of the particular storage space, wherein driving the at least one car in the transverse direction shifts a particular car among the one or more cars in the respective row into the particular lane. The particular lane may be a dedicated lane used for temporary storage of cars until retrieving of goods from a particular storage space is complete. The particular lane may be an outermost lane of the warehouse system and the particular car may be an outermost car among the one or more cars in the respective row, for example. When retrieving is complete, the temporarily shifted cars may be shifted back as the cleared path is no longer needed.

In another variant, it is also conceivable that more than one lane among the plurality of lanes is empty for temporary storage of cars. Although this may result in non-optimal use of space in the warehouse system, it may increase throughput when a large number of goods is to be retrieved from the warehouse system simultaneously. Also, it will be understood that, rather than a particular lane which may be empty across all rows, it may be sufficient that each row has at least one empty storage space, while the empty storage spaces of the different rows may be available on different lanes. In this case, provided that cars can be driven independently from each other or as a first set of cars and/or second set of cars, shifted cars do not necessarily have to be shifted back to their initial position which may help to save energy.

It will be understood that, for the driving devices mentioned above, different drive technologies may be used. While electric motors may be one feasible variant, other technologies may be employed, such as magnetic drives including magnetic linear drives, for example. Also, it will be understood that control signals may not necessarily have to be communicated to the shuttles and/or cars via wireless transmission. Since, in the normal storage state, the cars in a row may be coupled to one another, wire bound transmission of control signals from one car to another may be conceivable as well. Wire based power supply may be realized in the same manner. The coupling between two adjacent cars may be implemented by a magnetic or a mechanical connection which may be released upon receipt of a corresponding uncoupling signal from the control system.

In the above description, reference to the plurality of lanes and the plurality of rows of the warehouse system was mainly made by referring to a single level of the warehouse system. It will be understood, however, that the storage spaces of the warehouse system may be organized into a plurality of levels in the vertical direction. In this case, the warehouse system may comprise at least one lift drivable to transfer goods from one of the plurality of levels to another one of the plurality of levels. When employing warehouse-wide shuttles, the at least one lift may also be usable to transfer the at least one shuttle from one level to another. In a further variant, the warehouse system may comprise at least two groups of lifts, wherein one of the at least two groups of lifts may exclusively be used for storing new goods in the warehouse system and another one of the at least two groups of lifts may exclusively be used for retrieving stored goods from the warehouse system. In such a variant, it is conceivable that one group of lifts is arranged at one side of the warehouse system (e.g., at a side at which new goods are fed into the warehouse system) and another group is arranged at another side of the warehouse system (e.g., at a side at which retrieved goods are fed out of the warehouse system). A group of lifts may comprise a plurality of lifts, but may also be made up of a single lift only. In this way, an efficient transfer of goods (or shuttles) between the levels of the warehouse system may be achieved.

The present disclosure is not restricted to the aspects and variants in the described form and order. Specifically, the description of aspects and variants is not to be understood as a specific limiting grouping of features. It is to be understood that the present disclosure also covers combinations of the aspects and variants not explicitly described. Thus, each variant or optional feature can be combined with any other aspect, variant, optional feature or even combinations thereof.

In the following, the present disclosure will further be described with reference to exemplary implementations illustrated in the figures, in which:
- Figure 1: illustrates a perspective view of a warehouse system comprising a three-dimensional arrangement of storage spaces according to the present disclosure;
- Figure 2: illustrates a top view of the warehouse system of Figure 1;
- Figure 3: illustrates side views of a row of storage spaces in different configurations according to the present disclosure;
- Figure 4: illustrates a perspective view of a car according to the present disclosure having goods stored thereon from underneath the car;
- Figure 5: illustrates a perspective view of shifting means for a car according to the present disclosure;
- Figure 6: illustrates a perspective view of shifting means and holding means for a car according to the present disclosure;
- Figure 7: illustrates a perspective view of an empty car from underneath the car and details of holding means according to the present disclosure;
- Figure 8: illustrates a perspective view of a row of cars from underneath the row according to the present disclosure; and
- Figure 9: illustrates a flow diagram of a method for retrieving goods in a warehouse system according to the present disclosure.

In the following description, for purposes of explanation and not limitation, specific details are set forth in order to provide a thorough understanding of the present disclosure. It will be apparent to one skilled in the art that the present disclosure may be practiced in other implementations that depart from these specific details.

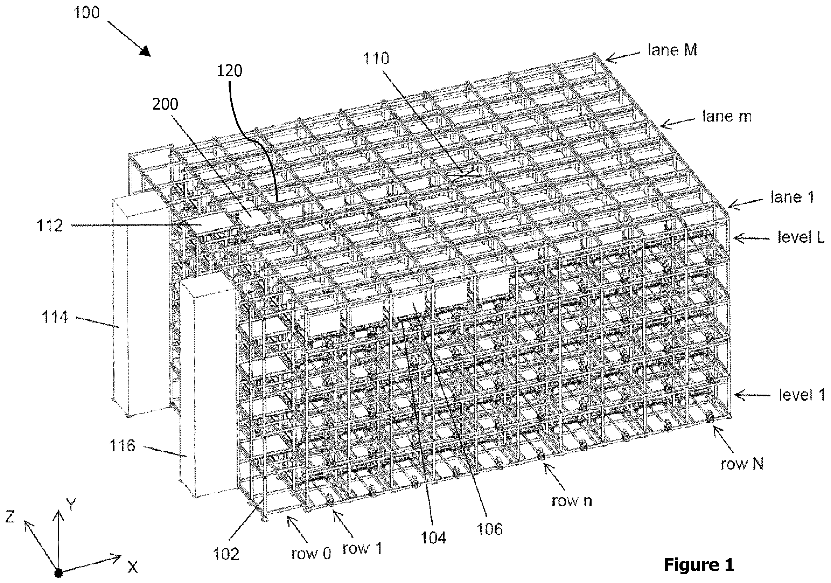

Figure 1 illustrates a perspective view of an exemplary warehouse system 100 which comprises a three-dimensional arrangement of storage spaces 110 including a plurality of lanes extending in a longitudinal direction X, a plurality of rows extending in a transverse direction Z, and one or more levels in a vertical direction Y of the warehouse system 100. The warehouse system 100 is formed by a rack frame structure 102 and, due to its three-dimensional structure, the warehouse system 100 may also be called a cubic warehouse system. In Figure 1, the number of lanes is denoted by M, the number of rows is denoted by N, and the number of levels is denoted by L. From the viewpoint of the lanes, each of the lanes provides storage spaces one after another in the longitudinal direction X, beginning at row 1 and ending at row N. Similarly, from the viewpoint of the rows, each of the rows provides storage spaces one after another in the transverse direction Z, beginning at lane 1 and ending at lane M. The plurality of levels ranges from level 1 to level L.

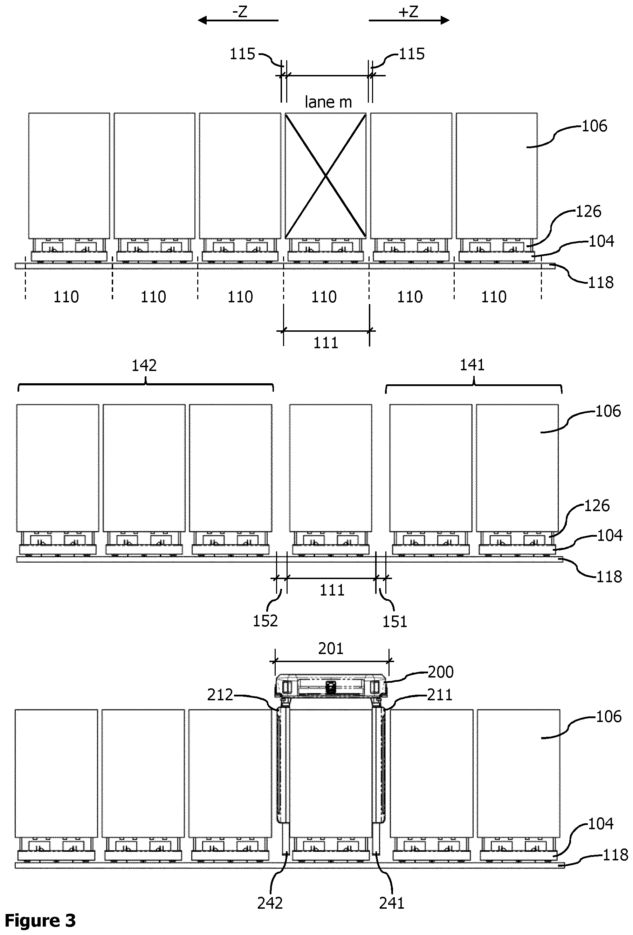

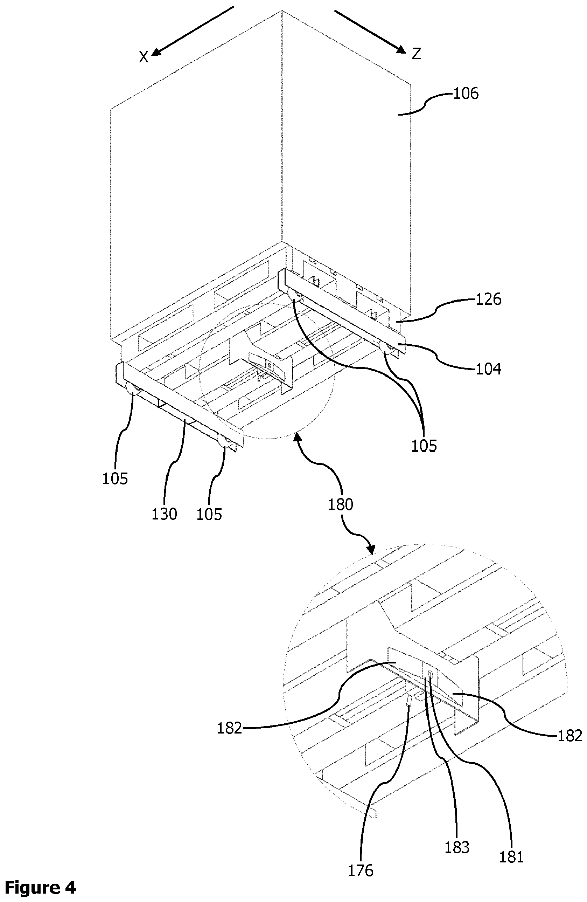

In order to store goods at the storage spaces of the warehouse system 100, cars 104 for carrying goods 106 (better visible in the detailed view of Figures 3 and 4) may be employed in each row. Each car 104 may be dimensioned to fit into one storage space and a plurality of cars 104 may be arranged one after another in both lane and row directions (i.e., one car per storage space). The cars 104 in a row are drivable along the row in the transverse direction Z. In the example of Figure 1, the number of cars 104 arranged in each row is exactly one less than the number of lanes M. In this way, it is ensured that each row at any time comprises at least one free storage space (i.e., a storage space where no car is placed) which can be used to temporarily relocate the cars 104 in a respective row in the transverse direction Z so that a path in a lane required by a shuttle to access a particular storage space in the longitudinal direction X may be cleared. Such situation is shown in the example of Figure 1 at level L, where a shuttle 200 is ready to be driven along lane m in the longitudinal direction X to pick up goods from a particular storage space 110 (indicated by a cross "X" in the figures). On levels 1 to L-1, on the other hand, all cars 104 are in a normal storage state, i.e., all cars 104 are carrying goods 106 and are parked in the storage spaces in rows 1 to N of lanes 2 to M. A normal storage state of a level may be said to be a state in which lane 1 is empty on that level. Lane 1 may thus be used as temporary storage space for those rows in which a path needs to be cleared, as explained above.

In Figure 1, only one shuttle 200 is visible. The shuttle 200 may be a warehouse-wide shuttle which may be relocated between different lanes as well as different levels of the warehouse system 100. Relocation of the shuttle 200 in the transverse direction Z from one lane to another may be carried out through a temporary movement along row 0 which serves for the purpose of transferring shuttles in the transverse direction Z and which may not be used for storing goods. A transfer of the shuttle 108 in row 0 from one lane to another may be carried out using a docking station 112. The docking station 112 may be used to transfer the shuttle 108 to one of the lifts 114 and 116 (indicated schematically only) as well which, in turn, may be driven to transfer the shuttle 200 to other levels. As may be seen in Figure 1, docking stations are also provided on other levels in row 0 to transfer shuttles on these levels in the transverse direction Z in an equivalent manner. In another variant, the shuttle 200 may be a level-wide shuttle (e.g., the warehouse system 100 may comprise one or more shuttles per level) which may be relocated between different lanes on the same level, as described above, but not between different levels. In still another variant, the warehouse system 100 may comprise separate shuttles for each of the plurality of lanes. In such a variant, relocation of shuttles between different lanes via row 0 may not be required at all. Goods could then be transferred at the end of the lanes (i.e., at row 1) to stacker cranes, for example. Thus, in such a case, row 0 and the lifts 114 and 116 may not be needed at all. In the example of Figure 1, for an efficient transfer between levels in the warehouse system 100, one of the lifts 114 and 116 may exclusively be used for storing new goods in the warehouse system 100 and the other one of the lifts 114 and 116 may exclusively be used for retrieving stored goods from the warehouse system 100.

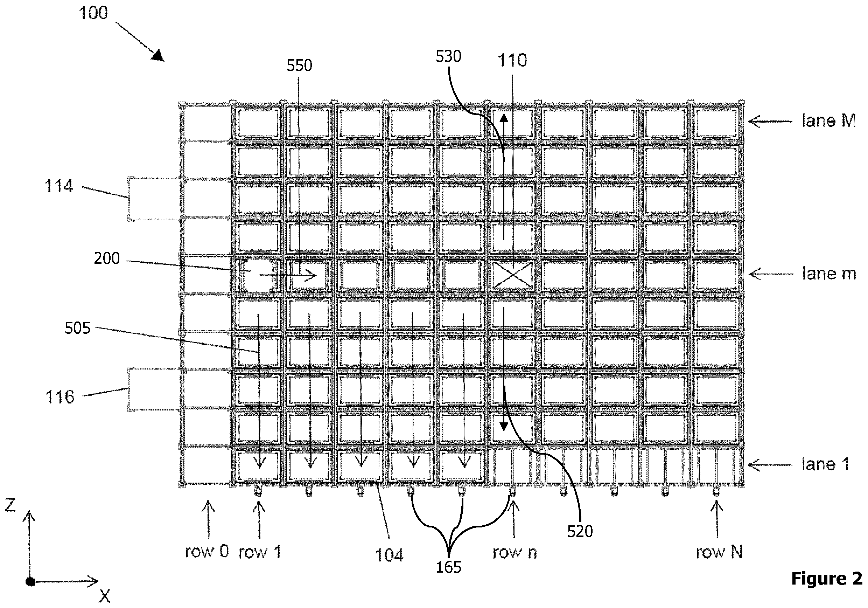

Figure 2 illustrates a top view of the warehouse system 100 and indicates steps performed in a method for retrieving goods from the particular storage space 110 in the warehouse system 100. Generally, when goods are to be retrieved by a shuttle from a particular storage space, such as the particular storage space 110, it may happen that, in the lane of the particular storage space, other storage spaces may be occupied that prevent the shuttle from shifting the goods from the particular storage space to the end of the lane where the goods may be transferred further in other directions as needed. In such a situation, goods are to be retrieved from a storage space 110 which is not an outermost occupied storage space in a lane. To gain access to the particular storage space for transfer of the goods by the shuttle, a path required to shift the goods by the shuttle from the particular storage space to the end of the lane must be cleared.

In Figure 2, a state is shown in which the path in lane m required by the shuttle 200 to retrieve goods from the particular storage space 110 has already been cleared. In the state illustrated, the shuttle 200 has not yet been driven to the particular storage space 110 to pick up the goods (cf. the same situation in Figure 1). The particular storage space 110 from which the goods are to be retrieved is the storage space at lane m, row n and level L of the warehouse system 100.

Prior to the state shown in Figure 2, all cars 104 on level L have been parked in the storage spaces in rows 1 to N of lanes 2 to M, whereas lane 1 was empty. To enable the shuttle 200 to shift the goods along a portion of lane m in the longitudinal direction X from the particular storage space 110 to the end of lane m (i.e., row 0 or row 1), a corresponding path in lane m had to be cleared. Thus, in a first step 505 (indicated by arrows pointing to the right in the transverse direction Z in Figure 2), the cars 104 which were initially parked in lanes 2 to m (i.e., in the normal storage state) were driven by one storage space in the transverse direction Z so that, after performing step 505, these cars 104 were positioned in lanes 1 to m-1. This movement of the cars 104 was performed for each row from the end of lane m (i.e., row 1 of lane m) to (but not including) the particular storage space 110, i.e., for rows 1 to n-1. In this way, a path in lane m has been cleared from rows 1 to n-1, thereby enabling the shuttle 200 to access the particular storage space 110 and to shift goods along lane m in the longitudinal direction X from the particular storage space 110 to the end of lane m. In step 505, all cars 104 in rows 1 to n-1 were driven in the transverse direction Z in parallel so that the path in lane m was cleared in just a single driving step.

Thereafter, in step 550 (indicated by an arrow pointing in the longitudinal direction X in Figure 2), the shuttle 200 may be driven to the particular storage space 110, where the shuttle 200 may pick up the desired goods and shift the goods along the cleared path from the particular storage space 110 to the end of lane m. For example, the shuttle 200 may be driven until row 0, where the shuttle 200 may be received by the docking station 112 which, in turn, may transfer the shuttle 200 to one of the lifts 114 and 116. The lift may then be used to transfer the goods from level L to another level. For example, the goods may be transferred to level 1, where a transfer point may be provided at which the goods may exit the warehouse system 100. When retrieving of the goods is complete, the temporarily shifted cars 104 may optionally be shifted back by one storage space in the opposite transverse direction Z (i.e., from lanes 1 to m-1 back to lanes 2 to m) as the cleared path is no longer needed. Lane 1 may thus be considered as a dedicated lane used for temporary storage of outermost cars 104 until the retrieving of goods is completed.

It will be understood that the above-described method of retrieving goods from the particular storage space 110 represents an effective way for clearing a required path since just a single driving step is needed to clear the required path. It will further be understood that it is generally conceivable that other relocation variants may be applied for clearing the respective path. This is generally possible because goods can be moved in both the longitudinal direction X and the transverse direction Z in the warehouse system 100. For example, it is conceivable that more than one lane among the plurality of lanes is empty for temporary storage of cars 104. Although this may result in non-optimal use of space in the warehouse system 100, it may increase throughput when a large number of goods is to be retrieved from the warehouse system 100 simultaneously. Also, it will be understood that, rather than a particular lane which is empty across all rows (such as lane 1 in the example described above), it may be sufficient that each row has at least one empty storage space, while the empty storage spaces of the different rows may be available on different lanes. In this case, provided that the cars 104 can be driven independently from each other, shifted cars 104 do not necessarily have to be shifted back to their initial position which may help to save energy.

Figure 3 illustrates side views of a row of storage spaces 110 in different configurations. For example, Figure 3 illustrates a side view of a portion of row n after step 505 (cf. Figure 2). For the sake of brevity and clarity, only lanes 4 to 9 of row n are illustrated. The storage of goods 106 can be achieved by arranging cars 104 along the row. Furthermore, the car 104 can carry a tray or pallet 126, on which the goods 106 are stored. Such tray or pallet 126 facilitates picking up the goods 106 from a storage space 110, as standardized tray or pallet 126 may be used that can be gripped by a standardized shuttle 200. The cars 104 can be placed on rails 118, along which they can roll or glide.

In the uppermost side view of Figure 3, one car 104 is arranged in each storage space 110. The cars 104 (and goods 106 stored thereon) are arranged in a compact way, as the space 115 between two neighbouring cars 104 is kept to a minimum. For instance, such minimal distance 115, also referred to as a "compact gap" herein, between two neighbouring cars 104 can correspond to a safety distance and/or tolerance between cars 104 and goods 106 in order to avoid interference between cars 104 and goods 106. Thus, the cars 104 in this row are arranged in a grid or matrix corresponding to a width 111 of each storage space. The width 111 of each storage space, however, is less than a width 201 of a shuttle 200 (cf. lower side view of Figure 3) in order to guarantee a compact warehouse system 100.

In order to allow the shuttle 200 to be placed at the particular storage space 110, for example, to pick up the goods 206, a first set of cars 141 is shifted in a first direction along the transverse direction Z. This direction is to the right in Figure 3 and indicated as +Z in Figure 3. The shifting of the first set of cars 141 moves the cars of the first set 141 by a first distance 151. The first set of cars 141 is arranged next to the particular storage space 110 (in lane m).

Simultaneously or thereafter, a second set of cars 142 is shifted in a second direction along the transverse direction Z and opposite to the first direction by a second distance 152. The second direction is to the left in Figure 3 and indicated as -Z in Figure 3. The second set of cars 142 is arranged next to the particular storage space 110 (in lane m) and opposite to the first set of cars 141 with respect to the particular storage space 110.

The number of cars 104 in each of the first set of cars 141 and second set of cars 142 is predefined by the particular storage space 110. In Figure 3, the first set of cars 141 comprises two (illustrated) cars 104 and the second set of cars 142 comprises three (illustrated) cars 104. It is to be understood that if the particular storage space 110 corresponds to a first or last car 104 in the row, i.e., a marginal car, there is only one set of cars 141, 142, which consists of all the remaining cars 104 in that row.

As illustrated in the lower side view of Figure 3, the first and second distance 151, 152 is each set to correspond to a width of a respective portion 211, 212 of the shuttle 200. This allows the portions 211, 212 of the shuttle 200 to be moved into a respective gap between the particular storage space 110 (in lane m) and a respective car 104 and goods 106 neighbouring the particular storage space, i.e., in lanes m-1 and m+1. In other words, a sum of the first and second distances 151, 152 and the width 111 of the particular storage space 110 in the transverse direction Z is at least the width 201 of the shuttle 200 in the transverse direction Z.

Since the cars 104 of the first and second set of cars 141, 142 have to be shifted only a small distance 151, 152, high density of goods 106 per length of a row can be achieved. It is not required that each storage space 110 has a width 111 wide enough for the shuttle 200 to be placed at each and every storage space 110 at any time. Thus, in long rows, one or more additional storage spaces 110 may be achieved, thereby increasing the density of goods 106 per length of a row.

A safety distance between the respective portion 211, 212 of the shuttle 200 to a neighbouring car 104 and goods 106 can still be present, e.g., if a safety distance between cars 104 and goods 106 was present in the normal (compact) configuration (cf. top side view of Figure 3), such as compact gap 115.

Again with reference to Figure 2, it is to be understood that the cars 104 in row 1 to row n-1 have to be shifted in the same manner as described with respect to Figure 3. This allows a distance between the cars 104 and goods 106 in lanes m-1 and m+1 of each row 1 to n-1 to be at least the width 201 of the shuttle 200, i.e., that this distance between the cars 104 and goods 106 is the sum of the first and second distances 151, 152 and the width 111 of the particular storage space 110.

For example, the shifting of a first set of cars 141 and a second set of cars 142 in each of rows 1 to n-1 may be performed simultaneously with step 505, where the cars 104 in each of rows 1 to n-1 are moved to clear the path to the particular storage space 110.

The shuttle 200 is now able to move in step 550 through lane m to the particular storage space 110 in row n (cf. Figure 2 and lower side view of Figure 3). In order to pick up the goods 106, the shuttle 200 can comprise gripping arms 241, 242, which can be brought underneath the goods 106 (or the tray or pallet 126) and the goods 106 from the car 104. Once lifted, the shuttle 200 can move the goods along the cleared path in lane m, for example, to the end of lane m in row 1 or 0.

As can be seen in Figure 3, if the particular storage space 110 is a marginal storage space, i.e., at the beginning or end of the row, there is only one set of cars 141, 142 on a side of the particular storage space 110 opposite to the beginning or end of the row. Thus, only one of the sets of cars 141, 142 has to be shifted, and the portion 211, 212 of the shuttle 200 that is arranged on the free side of the marginal storage space can be moved there in step 550 without problem or interfering with stored goods. In other words, only one widened gap between goods 106 for one of the portions 211, 212 of the shuttle 200 has to be formed by shifting the respective set of cars 141, 142.

Figure 4 illustrates a perspective view of a car 104 having goods 106 stored thereon from underneath the car 104. Such car 104 may have a frame structure that includes at least one roller 105, which may allow the car 104 to roll along rails 118 in the transverse direction Z, i.e., along a row. The car 104 allows placing the goods 106 thereon. For a standardized placing of goods 106, a tray or pallet 126 can be employed, wherein the goods 106 are placed on the tray or pallet 126 and the tray or pallet 126 is placed on the car 104. When picking up or placing goods 106 on a car 104 the tray or pallet 126 is also picked up or placed on the car 104, while the car 104 remains in the row all the time.

The car 104 can be equipped with shifting means 130, 180, such as a motor 130 driving at least one of the rollers 105. Thus, the motor 130 may be controlled in order to move the car 104 along the row, either for clearing a path in a lane (step 505) or for shifting the car 104 by the first or second distance 151, 152. A motor 130 may also be used as a holding means configured to hold the car 104 in a parking condition along the associated row. For instance, the motor 130 may provide a certain resistance against free rolling of the rollers 105, so that the car 104 is only moved along the row if the motor 130 is energized. Of course, any other holding means (not specifically illustrated) fixing the car 104 to the rails 118 can be employed as well.

Such motor 130 can be provided at every car 104. Alternatively, only one car 104 of the first and second set of cars 141, 142 can be equipped with a motor 130. For instance, the first car 104 and the last car 104 in a row (such as cars 104 in lane 2 and lane M in row n in Figure 2) can be provided with a motor 130, since these cars 104 will form part of the first and second set of cars 141, 142, respectively.

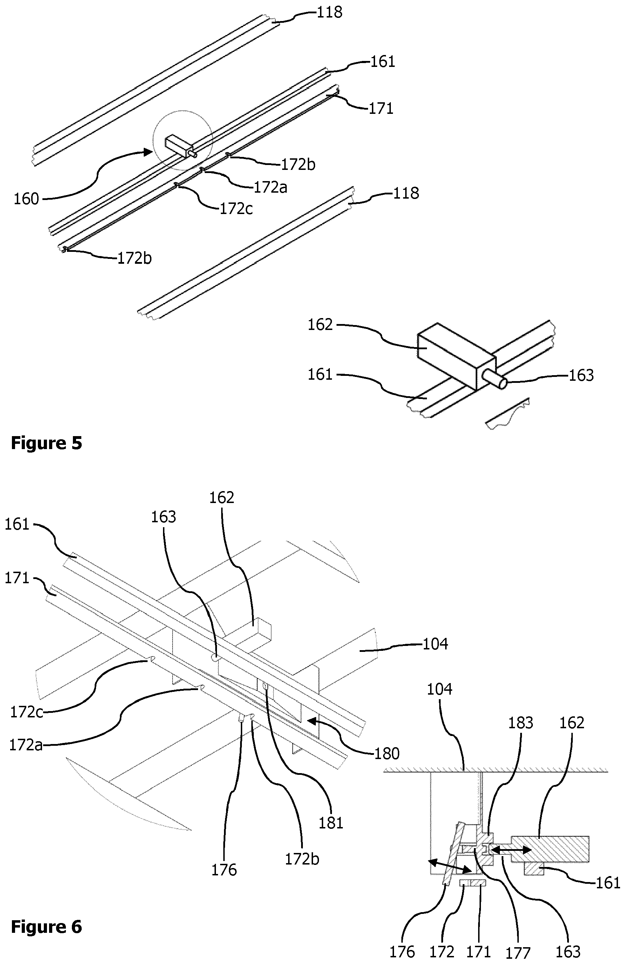

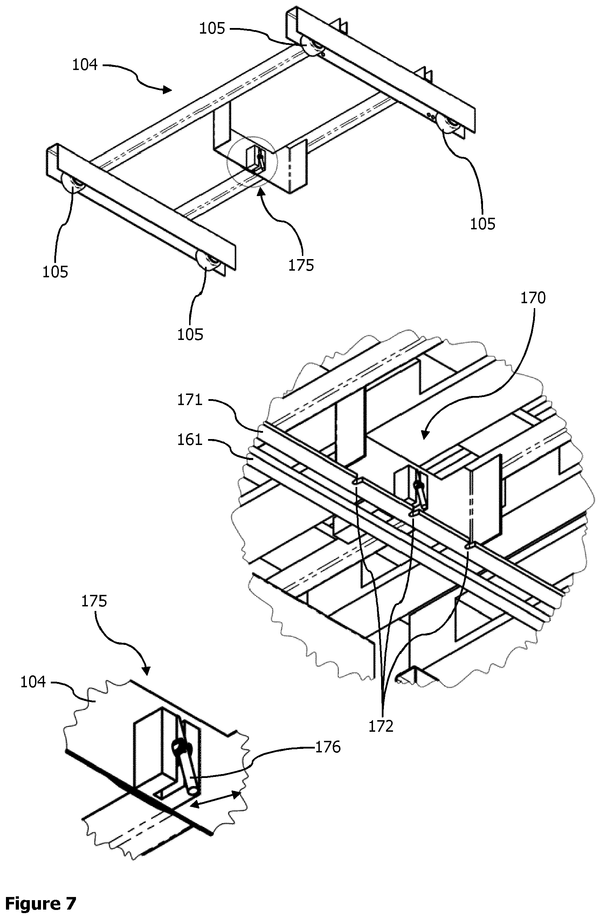

Another form of shifting means can be provided at the car 104 in form of a protruding member 183 having a recess 181. Such recess 181 and associated shifting means will be described in more detail with respect to Figures 5 and 7. The recess 181 can be flanked by a slant 182 on one or both sides in the transverse direction Z.

With additional reference to Figure 5, which illustrates a perspective view of exemplary shifting means 160, 180 for a car 104, the warehouse system 100 can comprise a bar 161 and a driver 162. The bar 161 is arranged in the transverse direction Z, i.e., along the row. The driver 162 can either be fixed to the bar 161 or can glide or slide along the bar 161. In the first configuration, the bar 161 can be a sliding bar 161 configured to move back and forth along the transverse direction Z. As a mere example, the back and forth movement of the bar 161 can be achieved by an actuator or motor 165 (cf. Figure 2) arranged at an end of the associated row. In the second configuration, the driver 162 is configured to move along the bar 161.

The driver 162 comprises a latching pin 163 that is configured to engage with one of the plurality of cars 104 to shift the car 104 along the transverse direction Z. The latching pin 163 can be extended relative to the driver 162, so that the latching pin 163 is capable of engaging with the recess 181 at the car 104. Thus, once engaged, the shifting means 160, 180 are able to shift the car 104 via the latching pin 163 coupled to the car 104 in the recess 181. The actual shifting of the car 104 takes place either by the back and forth movement of the sliding bar 161 or the movement of the driver 162 along the longitudinal direction Z.

An exemplary shifting means is now explained with respect to Figures 4 to 7. Figure 6 illustrates a perspective view of shifting means 160, 180 and holding means 170 for a car 104. For instance, the driver 162 can be moved with respect to the protruding member 183 in the transverse direction Z, so that the latching pin 163 can contact one of the slants 182 (cf. Figure 6). A further movement of the driver 162 results in the latching pin 163 being pushed into the driver 162 due to the slant 182. Once the latching pin 163 reaches the recess 181 (cf. detail of Figure 6), the latching pin 163 can be extended out of the driver 162 and into the recess 181. Thus, the driver 162 is coupled to the car 104 via latching pin 163 and protruding member 183.

The car 104 can be in a parking condition, either by the motor 130, a brake (not illustrated) and/or by a latching holding means 175. Such latching holding means 175 can include a pivotable pawl 176 arranged at the car 104 and configured to engage with a notch 172 at a latching rail 171. The pivotable pawl 176 can be in a holding position and a release position (cf. Figure 6) and can move between both positions illustrated by a double arrow. The pivotable pawl 176 may be provided with a biasing member (not illustrated) which induces a biasing force onto the pivotable pawl 176 bringing the pivotable pawl 176 to the holding position, i.e., to bring the pawl 176 into a notch 172 if the pivotable pawl 176 is aligned with such notch 172 in the latching rails 171.

In order to bring the pawl 176 into the release position, the pawl 176 may be actuated by an actuator (not illustrated). Alternatively and in accordance with the illustrated example, the car 104 can comprise a push rod 177 configured to pivot the pivotable pawl 176 between the holding position and the release position. The shifting means 160, such as the latching pin 163 may be configured to actuate the pushrod 177. For instance, when extending at the latching pin 163 away from the driver 162 and into the recess 181, the pushrod 177 may be pushed towards the pivotable pawl 176 (i.e., away from the driver 162), so that the pivotable pawl 176 is pushed out of the notch 172, i.e., in the release position. The pushrod 177 can, for example, be arranged in the recess 181 or can be arranged next to the recess 181. Thus, when the shifting means 160 couple to a car 104, a parking condition of the car 104 can be released by the shifting means 160 and the car 104 can be shifted also by the shifting means 160.

The latching rail 171 can have at least one notch 172, wherein at least one notch 172 is arranged per storage space 110. In other words, a distance between two notches 172 along the latching rail 171 can correspond to the width 111 of the storage space 110. Thus, a car 104 can be brought into a parking condition at each storage space 110 when the pivotable pawl 176 engages with the notch 172 associated with the storage space 110.

As illustrated in Figures 5 to 7, the latching rail 171 provides a first group of notches 172 for a first storage space 110 and a second group of notches 172 for a second storage space (only one notch 172b of the second group of notches is visible in Figure 5). A distance between a first notch 172c and a second notch 172a of the first group is equal to the first distance 151. Likewise, a distance between the second notch 172a and a third notch 172b is equal to the second distance 152. This arrangement of notches and having the distances 151, 152 therebetween can be applied to each group of notches 172, i.e., per storage space 110.

Thus, if the car 104 is in the parking condition with the pivotable pawl 176 engaged in the second (e.g., middle) notch 172a, the car can be shifted by the first distance 151 or the second distance 152 and be brought in a parking condition at the corresponding position along the row by engaging the pivotable pawl 176 with the respective first notch 172c or third notch 172b.

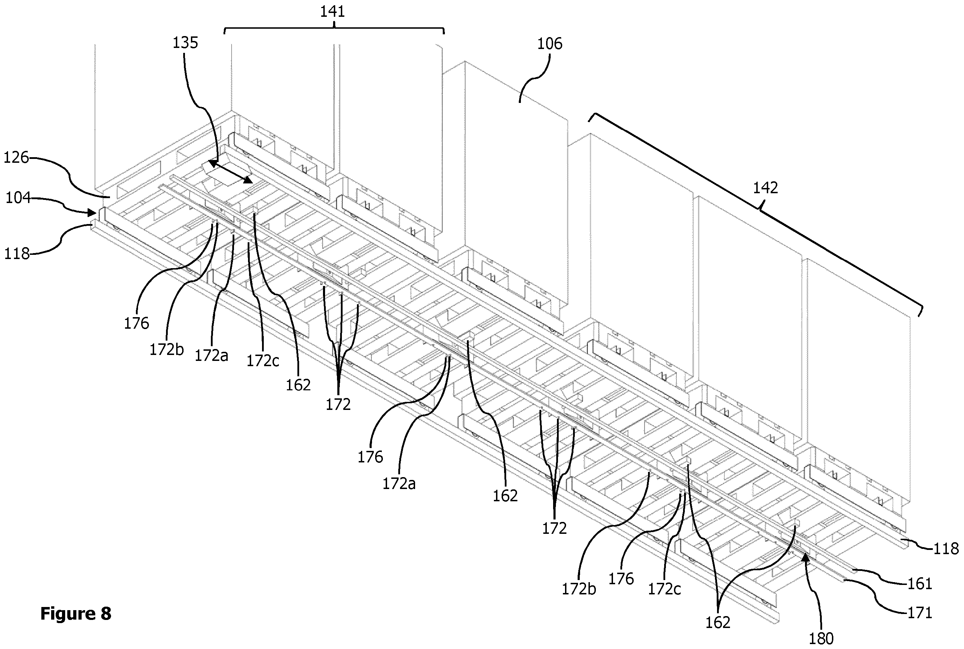

Figure 8 illustrates a perspective view of a row of cars 104 from underneath the row. As in the middle side view of Figure 3, a car 104 is arranged at the particular storage space 110, while a first set of cars 141 has been shifted by the first distance 151 and a second set of cars 142 has been shifted by the second distance 152. As illustrated in Figure 8, the cars 104 of the first set of cars 141 is in a parking condition with respect to a first notch 172b, the car 104 at the particular storage space 110 is in a parking condition with respect to a second notch 172a, and the cars 104 of the second set of cars 142 are in a parking condition with respect to the third notch 172c. Thus, all cars 104 in the row are in a parking condition and the first and second set of cars 141, 142 has been shifted away from the particular storage space 110 thereby forming a respective widened gap, so that the shuttle 200 can move to the particular storage space 110 and pick up the goods 106.

Figure 8 further illustrates an exemplary configuration of the shifting means 160 including a sliding bar 161 and one driver 162 for each storage space 110. Thus, each car 104 can be shifted by a respective driver 162 and associated latching pin 163.

For instance, in order to achieve the situation illustrated in Figure 8, all cars in the row may be first in a parking condition at the respective second notch 172a of each storage space 110. The latching pins 163 of the drivers 162 corresponding to the storage spaces of the cars 104 of the second set of cars 142 and the particular storage space 110 are retracted. The sliding bar 161 can now be moved, so that the latching pins 163 of the drivers corresponding to the storage spaces of the cars 104 of the first set of cars 141 can engage with the recess 181 of the cars 104 of the first set of cars 141 (if the latching pins 163 are not already engaged from a previous shifting). This engaging of the latching pins 163 with the recess 181 also brings the corresponding pivotable pawl 176 in a release position of the cars 104 of the first set of cars 141. By moving the sliding bar 161 by the first distance 151, the cars 104 of the first set of cars 141 are brought to a position where the pivotable pawl 176 can engage the respective third notch 172b. Retracting the latching pins 163 allows the cars 104 of the first set of cars 141 to be brought into a parking condition at this position along the row.

Thereafter, the latching pins 163 of the storage spaces 110 corresponding to the first set of cars 141 and the particular storage space 110 are retracted into the driver 141, and the sliding bar 161 is moved back, i.e., in the second direction. Since the latching pins 163 of the storage spaces 110 corresponding to the second set of cars 142 are not retracted (i.e., are extended), the latching pins 163 will engage with corresponding recesses 181 of the cars 104 of the second set of cars 142 (e.g., after moving along the respective slant 182). This also releases the parking condition of the respective cars 104 by pushing the pivotable pawl 176 out of the second notch 172a. In the engaged position the drivers 162 and latching pins 163 corresponding to the cars 104 of the second set of cars 142 can move these cars 104, for example, by a further movement of the sliding bar 161 in the second direction. After shifting the cars 104 by the second distance 152, the latching pins 163 are retracted, so that the pivotable pawl 176 of each car 104 of the second set of cars 142 can engage with the first notch 172c.

It is to be understood that this is only an exemplary manner of shifting the cars 104. It is also conceivable that only one car 104 of each set of cars 141, 142 is shifted, while the remaining cars 104 of the respective set 141, 142 is coupled to the shifted car 104.

Furthermore, Figure 8 illustrates another exemplary means for shifting at least one car 104 in form of a carrier 135 configured to move along the associated row in the transverse direction Z. Such carrier 135 can move along the row, for example along one or more of the rails 118, or along a dedicated rail for the carrier 135 (not illustrated). The carrier 135 is configured to couple to at least one car 104 in order to shift the car 104 in the first or second direction. Thus, the carrier 135 can be moved to each car 104 individually, in order to shift them car-by-car in the first direction and second direction by the first distance 151 and second distance 152, respectively. Of course, cars 104 of one set of cars 141, 142 can also be coupled to one another, so that the carrier 135 is only required to engage with one of the cars 104 of the respective set 141, 142, in order to shift the entire set of cars 141, 142 by the first distance and second distance, respectively.

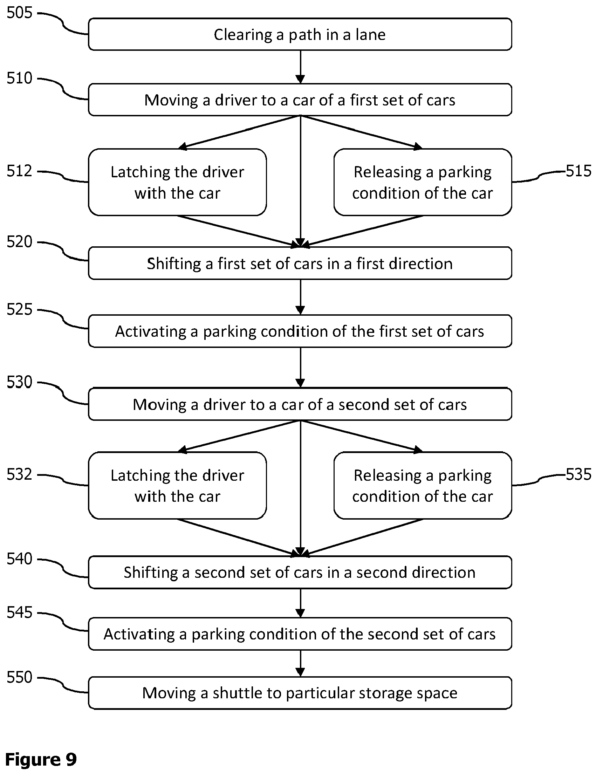

Figure 9 illustrates a flow diagram of a method for retrieving goods 106 from a particular storage space 110 in a warehouse system 100. As described with respect to Figures 1 and 2, in a first step 505 a path in a lane is cleared, in order to allow a shuttle 200 to move through the cleared path to the particular storage space. It is to be understood that the path to the particular storage space 110 can be free already, in case no car 104 or good 106 has been moved into that portion of the lane or in case the particular storage space lies at a beginning or end of the lane. The step 505 can include shifting the cars 104 on each side of the path by a first distance 151 and a second distance 152, respectively, to allow the shuttle 200 to move through the entirely cleared path.

When the particular storage space 110 can be reached by the shuttle 200, an optional step 510 of moving a driver 162 to at least one car of the first set of cars 141 is performed. Instead of a driver 162, a carrier 135 can be moved to the at least one car. Subsequently, the driver 162 or carrier 135 can be latched in step 512 to the at least one car of the first set of cars 141. These optional steps may be applied if a driver 162 or carrier 135 are employed in the warehouse system 100, but can be omitted in case at least one of the cars comprises a motor 130, so that the at least one car can drive autonomously without driver 162 or carrier 135.

In a further optional step 515, which may be applied when employing a driver 162 or carrier 135 as well as when employing a motor 130, comprises releasing a parking condition of the car 515. This may include releasing a mechanical coupling of the car with a fixed component of the warehouse system 100, such as a pivotable pawl 176 from a notch 172, releasing a brake (not illustrated) and/or energizing the motor 130.

In any case, in step 520, a first set of cars 141 is shifted in a first direction along the row (along the transverse direction Z) by a first distance 151. This first distance 151 is only a small stretch along the row, in order to provide sufficient space for a shuttle to reach the particular storage space 110, as described above.

Step 520 is performed for a row associated with a particular storage space from which the shuttle 200 is to pick up goods 106. In order to clear the path to this row along a lane, the shifting of the first set of cars 141 and the second set of cars 142 in step 520 can also be performed for each row in the path to be cleared. It is to be understood that the shifting of the cars 104 in all rows along the path and the associated row can be performed simultaneously or one row after the other.

In a similar manner, in step 540, a second set of cars 142 is shifted in a second direction along the row (along the transverse direction Z) by a second distance 152. The second distance 152 is also only a small stretch along the row, but in the opposite direction than the first direction. The second set of cars 142 are arranged next to the particular storage space 110 and opposite from the particular storage space 110 to the first set of cars 141 in the associated row.

Before shifting the second set of cars 142, optional steps may be performed. Such optional steps can be step 530, i.e., moving a driver 162 or carrier 135 to a car of the second set of cars 142, latching the driver with the car in step 532, and/or releasing a parking condition of at least one car of the second set of cars 142 in step 535.

As with the first set of cars 141, the shifting of the second set of cars 142 may be performed not only for the row associated with the particular storage space 110, but for all rows along the path to be cleared. These shifting actions may be performed simultaneously for all the rows or for one row after the other.

When the first set of cars 141 has been shifted, a parking condition of the first set of cars 141 can be activated in optional step 525. Likewise, when the second set of cars 142 has been shifted, a parking condition of the second set of cars 142 can be activated in optional step 545.

In any case, after shifting the first and second set of cars 141, 142, a shuttle 200 is moved in step 550 to the particular storage space 110 along the cleared path of the lane. Once reached, the shuttle 200 can pick up the goods 106 stored at the particular storage space 110 or can place goods 110 at the particular storage space 110. If picking up goods 106, the shuttle 200 can move back through the cleared path of the lane, in order to bring the goods 106 to a place where they can be further transported.

As has become apparent from the above, the present disclosure provides techniques for automated warehouse systems which enable direct access to any desired storage space provided in the warehouse systems, while achieving a very compact storage of goods. Compact warehouse systems with improved space savings and improved accessibility of goods may thus be achieved.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A method for retrieving goods (106) from a particular storage space (110) in a warehouse system (100) comprising an at least two-dimensional arrangement of storage spaces (110) including a plurality of lanes extending in a longitudinal direction (X) and at least one row extending in a transverse direction (Z), wherein a storage space (110) is formed at each intersection of the plurality of lanes and the at least one row, wherein a plurality of cars (104) for carrying goods (106) and at least one shuttle (200) are employed to store goods (106) at the storage spaces (110), wherein the plurality of cars (104) is arranged in the at least one row, the cars (104) in a respective row being movable along the respective row in the transverse direction (Z), wherein the at least one shuttle (200) is movable along at least one of the plurality of lanes in the longitudinal direction (X), and wherein a width (111) of each storage space (110) in the transverse direction (Z) is less than a width (201) of each of the at least one shuttle (200) in the transverse direction (Z), the method comprising:
shifting (520), in a first direction along the transverse direction (Z), a first set of cars (141) arranged next to the particular storage space (110) in an associated row by a first distance (151);
shifting (540) a second set of cars (142) in a second direction along the transverse direction (Z) opposite to the first direction by a second distance (152), the second set of cars (142) being arranged next to the particular storage space (110) and opposite, with respect to the particular storage space (110), to the first set of cars (141) in the associated row;
moving (550) the at least one shuttle (200) in the longitudinal direction (X) to the particular storage space (110) to pick up goods (106) from the car (104) at the particular storage space (110),
wherein the sum of the first and second distances (151, 152) and the width (111) of the particular storage space (110) in the transverse direction (Z) is at least the width (201) of the shuttle (200) in the transverse direction (Z).

2. The method of claim 1, wherein the sum of the first and second distances (151, 152) and the width (111) of the particular storage space (110) in the transverse direction (Z) is at most the width (201) of the shuttle (200) in the transverse direction (Z), and preferably at most the width (201) of the shuttle (200) in the transverse direction (Z) plus a safety distance between the shuttle (200) and one of the first and second set of cars (141, 142) closest to the shuttle (200).

3. The method of claim 1 or 2, wherein shifting (520, 540) the first and second set of cars (141, 142) comprises:
driving each of the cars of the first and second set of cars (141, 142) in the respective first and second direction individually; or
driving at least one of the cars of the first and second set of cars (141, 142) in the respective first and second direction, wherein the cars (104) of the first set of cars (141) are coupled to one another and the cars (104) of the second set of cars (142) are coupled to one another.

4. The method of one of claims 1 to 3, further comprising:
moving (510) a driver (162) to at least one of the cars (104) of the first set of cars (141) and latching (512) the driver (162) with the at least one car (104) of the first set of cars (141) before said shifting (520) the first set of cars (141) in the first direction; and
moving (530) a driver (162) to at least one of the cars (104) of the second set of cars (142) and latching (532) the driver (162) with the at least one car (104) of the second set of cars (142) before said shifting (540) the second set of cars (142) in the second direction (Z),
wherein said shifting (520, 540) of the first and second set of cars (141, 142) is performed by the driver (162), and/or
wherein, preferably, the driver (162) comprises a respective driver (162) for each storage space (110).

5. The method of claim 4, wherein:
said latching (512) the driver (162) with the at least one car (104) of the first set of cars (141) comprises releasing (515) a parking condition of the first set of cars (141); and
said latching (532) the driver (162) with the at least one car (104) of the second set of cars (142) comprises releasing (535) a parking condition of the second set of cars (142).

6. The method of one of claims 1 to 5, further comprising:
activating (525) a parking condition of the first set of cars (141) in the associated row, and activating (545) a parking condition of the second set of cars (142) in the row; and/or
releasing (515) the parking condition of the first set of cars (141) before said shifting (520) the first set of cars (141), and releasing (535) the parking condition of the second set of cars (142) before said shifting (540) the second set of cars (142).

7. A warehouse system (100) having an at least two-dimensional arrangement of storage spaces (110) including a plurality of lanes extending in a longitudinal direction (X) and at least one row extending in a transverse direction (Z), wherein a storage space (110) is formed at each intersection of the plurality of lanes and the at least one row, the warehouse system (100) comprising:
a plurality of cars (104) for carrying goods (106), wherein the plurality of cars (104) is arranged in the at least one row, the cars (104) in a respective row being movable along the respective row in the transverse direction (Z);
at least one shuttle (200) movable along at least one of the plurality of lanes in the longitudinal direction (X) for retrieving goods (106) from a particular storage space (110),
shifting means (130, 135, 160, 180) configured to shift, in a first direction along the transverse direction (Z), a first set of cars (141) arranged next to the particular storage space (110) in an associated row by a first distance (151), and further configured to shift a second set of cars (142) in a second direction along the transverse direction (Z) opposite to the first direction by a second distance (152), the second set of cars (142) being arranged next to the particular storage space (110) and opposite, with respect to the particular storage space (110), to the first set of cars (141) in the associated row,
wherein a width (111) of each storage space (110) in the transverse direction (Z) is less than a width (201) of each of the at least one shuttle (200) in the transverse direction (Z), and
wherein the sum of the first and second distances (151, 152) and the width (111) of the particular storage space (110) in the transverse direction (Z) is at least the width (201) of the shuttle (200) in the transverse direction (Z).

8. The warehouse system (100) of claim 7, wherein the shifting means (130, 135, 160, 180) comprises:
an individual motor (130) at each car (104), wherein the motor (130) is configured to shift the respective car (104) along the associated row; or
a motor (130) arranged at one car (104) of each of the first and second set of cars (141, 142), wherein the motor (130) is configured to shift the respective car (104) along the associated row, and wherein the cars (104) of the first set of cars (141) are coupled to one another and the cars (104) of the second set of cars (142) are coupled to one another; or
a carrier (135) configured to move along the associated row in the transverse direction (Z) and further configured to couple to at least one car (104) in order to shift the car (104) in the first or second direction; or
a sliding bar (161) configured to move back and forth along the transverse direction (Z), at least one driver (162) arranged on the sliding bar (161), and a latching pin (163) at each of the at least one driver (162) and configured to engage with one of the plurality of cars (104) to shift the car (104) based on the back-and-forth movement of the sliding bar (161).

9. The warehouse system (100) of claim 8, wherein at least one of the cars (104) comprises:
a protruding member (183) having a recess (181), the recess (181) being configured to receive the latching pin (163) of the at least one driver (162),
wherein, preferably, the driver (162) is configured to extend the latching pin (163) relative to the driver (162) and into the recess (181) of the protruding member (183), and/or the protruding member (183) has a slant (182) on each side in the transverse direction (Z) to push the latching pin (163) into the driver (162) when the driver moves relative to the car (104) in the transverse direction (Z).

10. The warehouse system (100) of claim 9, wherein the driver (162) is configured to retract the latching pin (163) out of the recess (181) of the protruding member (183),
wherein, preferably, the driver (162) includes an electrical actuator retracting the latching pin (163) against a biasing member biasing the latching pin (163) to extend from the driver (162).

11. The warehouse system (100) of one of claims 7 to 10, further comprising:
holding means (130, 170) configured to hold the plurality of cars (104) in a parking condition along the associated row,
wherein, preferably, the holding means (130, 170) comprises:
an individual breaking device (130) at each car (104), wherein the braking device (130) is configured to hold the respective car (104) along the associated row; or
a breaking device (130) arranged at one car (104) of each of the first and second set of cars (141, 142), wherein the breaking device (130) is configured to hold the respective car (104) along the associated row, and wherein the cars (104) of the first set of cars (141) are coupled to one another and the cars (104) of the second set of cars (142) are coupled to one another; or
a latching rail (171) having at least one notch (172), the latching rail (171) being fixedly arranged in the warehouse system (100) along the associated row, and a pivotable pawl (176) arranged at at least one of the cars (104), wherein the pivotable pawl (176) is configured to engage with the at least one notch (172) to hinder a movement of the car (104) along the associated row.

12. The warehouse system (100) of claim 11, wherein two or more of the at least one notch (172) form a first group of notches, wherein a distance between a first notch (172c) and a second notch (172a) of the first group of notches is equal to the first distance (151),
wherein, preferably, a distance between the second notch (172a) and a third notch (172b) of the first group of notches is equal to the second distance (152).

13. The warehouse system (100) of claim 12, wherein the latching rail (171) has at least two groups of notches (172), wherein each group comprises at least two notches (172b, 172c) and is associated with one storage space (110), and wherein a distance between the first notch (172b) of the first group of notches and a first notch (172b) of a second group of notches (172) is equal to the width (111) of each storage space (110).

14. The warehouse system (100) of one of claims 11 to 13, wherein the at least one car (104) comprises:
a pushrod (177) configured to pivot the pivotable pawl (176) between a holding position, in which the pivotable pawl (176) engages with the at least one notch (172), and a release position, in which the pivotable pawl (176) is disengaged from the at least one notch (172) allowing the movement of the car (104) along the associated row.

15. The warehouse system (100) of claim 14, wherein:
the at least one car (104) comprises an actuator configured to actuate the pushrod (177) or pivot the pivotable pawl (176), in order to change the pivotable pawl (176) between the holding position and the release position, or
the shifting means (130, 135, 160, 180) is configured to actuate the pushrod (177) to bring the pivotable pawl (176) from the holding position to the release position.
